# EUROPEAN PATENT SPECIFICATION

(11) **EP 3 594 461 B1**
(45) Date of publication and mention of the grant of the patent: **26.08.2020**
(21) Application number: 19185978.4
(22) Date of filing: 12.07.2019
(51) Int. Cl.: F01M 13/04, B04B 5/12

(54) **ROTARY SEPARATOR FOR FILTERING THE MIXTURE OF GAS AND SUPSENSION OIL PRESENT IN THE CRANKCASE**
DREHENDER ABSCHEIDER ZUM FILTERN VON KURBELWELLENGAS
SEPARATEUR ROTABLE POUR FILTRER LE GAZ DU CARTER

(30) Priority: 13.07.2018 IT 201800007172
(43) Date of publication of application: 15.01.2020
(73) Proprietor: S.T.C. S.r.l., 10091 Alpignano (TO) (IT)
(72) Inventor: COLONNA, Giuseppe, 10091 ALPIGNANO (TO) (IT)
(74) Representative: Bongiovanni, Simone

(56) References cited:
- EP-A1- 3 124 120
- EP-A1- 3 311 923
- WO-A1-99/56883
- DE-A1-102008 030 028
- DE-A1-102015 224 226
- DE-C1- 19 947 143
- US-A1- 2011 180 051

## Description

### CROSS-REFERENCE TO RELATED APPLICATIONS

This patent application claims priority from Italian patent application no. 102018000007172 filed on 13/07/2018.

### TECHNICAL FIELD

The present invention relates to a rotary separator for filtering the mixture of gas and suspension oil, commonly known as blow-by, which is present in the crankcase.

### BACKGROUND ART

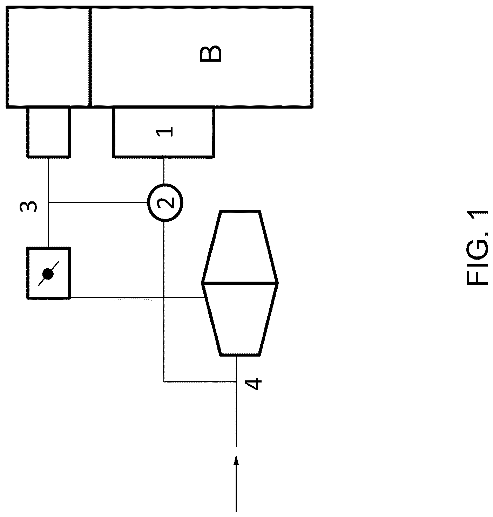

The blow-by mixture, for environmental reasons, can no longer be discharged directly to the outside of the engine and therefore must be recirculated to the engine intake. This normally occurs at a point between the air filter and the intake manifold, if the engine is aspirated, or at a point between the air filter and the mouth of the turbo compressor, if the engine is equipped therewith. Cases are also envisaged, in spark ignition engines, in which a pressure-controlled or electrically controlled valve can change the suction point between the aforementioned two points, so as to exploit the most favourable source of depression depending on the operating point of the combustion engine.
With reference to Figure 1, which represents the prior art, the present invention finds application in a separation system located at point 1 of the circuit and having an input connected to the internal part of the crankcase B and an output connected to the suction point 2 or 3 depending on how the valve 4 is actuated, or connected to point 2 if the system has no valve.
Several filtering systems are known which are designed to filter Blow-By mixtures infiltrating the crankcase through the piston seal segments.

For example, a rotary filter can be used in which a cartridge provided with a filtering medium rotates under the thrust of a rotating element of the engine with which it is integral and through which the blow-by mixture flows in a centripetal direction, with the gas proceeding towards the hub while the oil filtered by the medium and retained on the outer surface is centrifuged back towards the engine sump. This filter is universally recognized as the best filtration system, with efficiencies that can exceed 90%, but at the same time has a number of problems in some engine operating conditions. In particular, problems of saturation (clogging) of the filtering medium at low revolutions are known, because in those conditions the centrifugal force is not sufficient to make the cartridge self-cleaning. Oil accumulation on the cartridge surface lowers its permeability until the pressure in the crankcase rises above the desirable threshold. This makes it necessary to have an overpressure release PCV (Pressure Control Valve), which, however, when opened, allows the entire blow-by flow to pass through without the necessary separation of the oil from the combusted gases and this can also lead to critical breakage, for example of the turbo compressor wheel through which these gases pass.

On the other hand, the alternative separation systems, such as the labyrinth or cyclone separators, are unlikely to exceed 70% efficiency in optimal condition, and the impactor + fleece separators are unlikely to exceed 80% efficiency.

This is because these three types are based on the deflection of the flow, and therefore ultimately on the pressure drop, in order to separate the oil droplets from the gas flow, and they all have the problem of not being able to create an excessive pressure drop. Since the only depression that can be used for the flow is that generated by the pressure drop of the air filter, the pressure drop that can be used by the separation system is necessarily limited and in any case can only be adjusted at one operating point of the engine map. This limits the average separation capacity of these types of filters.

European patent EP-3, 311, 923 describes a rotary separator for filtering the blow-by mixture, wherein a casing is provided with a gas suction opening and a plurality of oil outlet openings. The chamber houses a rotor which is angularly movable with respect to the casing and provided with a radial blading which provides an impact system for the oil particles of the blow-by mixture.

The separator of European patent EP-3,311,923 must be mounted with the axis essentially vertical.

The object of the present invention is to provide a separator for separating the oil contained in the blow-by present in the crankcase, which solves the problems of the known systems and can be installed both vertically and horizontally.

### Summary of the invention.

The above object is achieved by the present invention in so far as it relates to a rotary separator for filtering the gas mixture present in the crankcase, comprising a casing provided with at least one gas suction opening and a plurality of oil outlet side openings, said casing defining a chamber that houses a rotary system which is shaped to define a plurality of paths P which extend from the gas suction opening to the oil outlet openings, **characterised in that** the rotary system is configured to carry out a dual function:
a) providing a radial blading for a centrifugal fan that sucks the gas mixture from the suction opening and sends it to the outlet openings; and
b) providing, by means of said radial blading, an impact system along which the sucked gas mixture flows and the oil particles present in the mixture impact against walls defining the path and are pushed by the centrifugal force towards the oil outlet openings so as to be released outside the rotary separator.

The rotary system according to the invention is configured to provide nozzles with sections decreasing along the path and adapted to accelerate the gas mixture; abutment means being provided, which are adapted to carry out a sudden change of path of the accelerated gas mixture to obtain the release of the oil particles.

The principle of operation of the invention uniquely combines the favourable properties of the systems mentioned in the state of the art, while eliminating or significantly reducing the causes of their reduced efficiency.

Specifically, it acts as an impact system, in which a mixture of gas and suspended oil droplets is accelerated by nozzle-shaped walls and then subjected to a sharp deviation, causing it to swerve. The gaseous component, since it is light, manages to travel the whole curve despite the reduced radius, whereas the liquid droplets, since they are heavier, travel a larger radius, which necessarily leads them to impact the wall opposite the nozzle.
The section of the nozzles, which in a static impact system is limited by the maximum admissible pressure drop, can be much smaller here because the greater pressure drop is compensated for by the positive pressure generated by the separator itself thanks to its rotary motion and its blading. At the same time, due to its positive pressure generation, the system allows two or more separation steps in series, whereas a traditional system shall normally be limited to a pre-separator with limited capacities, for example a settling tank, and only one real separation step. The radial extension of the separator guarantees spaces increasing with the square of the radius, and the prevalence created at the same speed of rotation increases by the same proportionality factor.
This allows the separator to be greatly adapted to each engine, as the designer can act on additional parameters compared to the traditional systems. The separator can thus be successfully applied to engines having sizes and rotational speeds which may differ very much from one another.

### Description of the figures

The invention will now be illustrated with reference to the accompanying figures which represent a preferred nonlimiting embodiment thereof, in which:
- Figure 1 shows a circuit typical of an internal combustion engine equipped with a separator for separating oil from the Blow-By;
- Figure 2 is an exploded perspective view illustrating a rotary separator implemented according to the teachings of the present invention;
- Figure 3 is a cross section of the separator along the plane A-A of Figure 2;
- Figure 4 is a perspective view of the cross section;
- Figure 5 shows the operating mechanism of the rotary separator;
- Figure 6 shows a first variant of the rotary separator of Figures 2, 3, 4 and 5; and
- Figure 7 shows a second variant of the rotary separator of Figures 2, 3, 4 and 5.

### Preferred embodiment

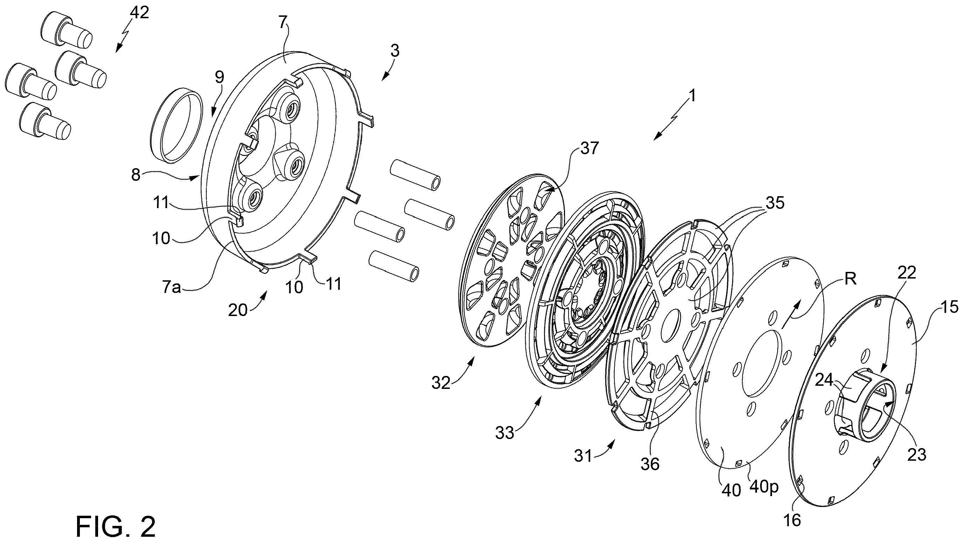

In **Figure 2****,** reference number 1 indicates, as a whole, a rotary separator suitable for filtering the gas mixture (blow-by) present in the crankcase. This gas mixture includes exhaust gases and suspended oil particles.

As will be clear from the following description, the rotary separator 1 comprises a single rotating assembly configured to provide an air pump and an impact system inside which the gas mixture is sucked due to the suction action of the air pump itself and to the depression in the engine intake. The impact system is suitable to separate the oil particles of the gas mixture, absorb them on a specific sheet material and release them outside the rotating assembly from the edge of the sheet material.

The rotary separator 1 comprises a cup-shaped casing 3 defining a cylindrical inner chamber 4 with axial symmetry with respect to an axis H.

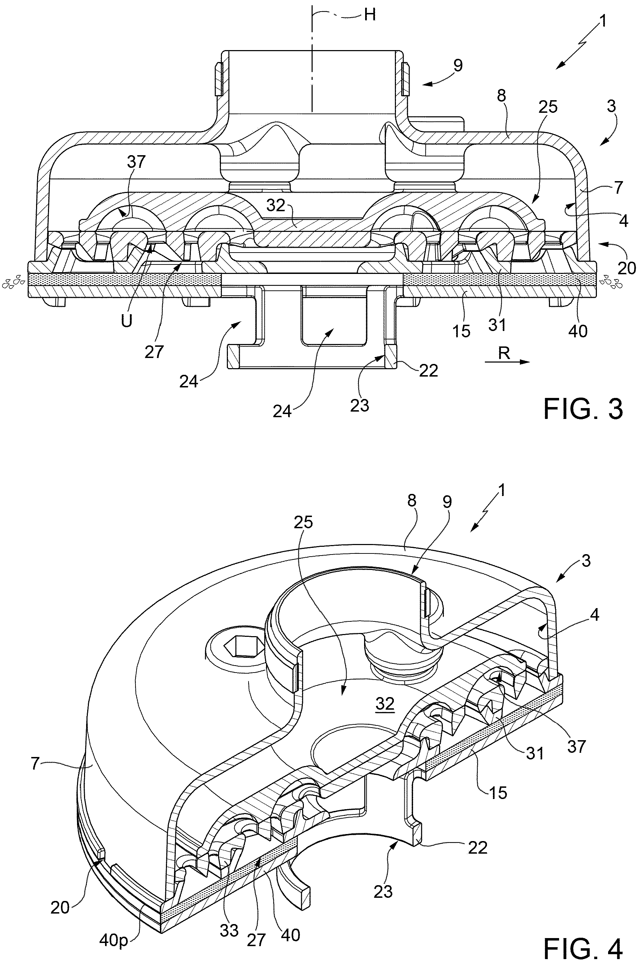

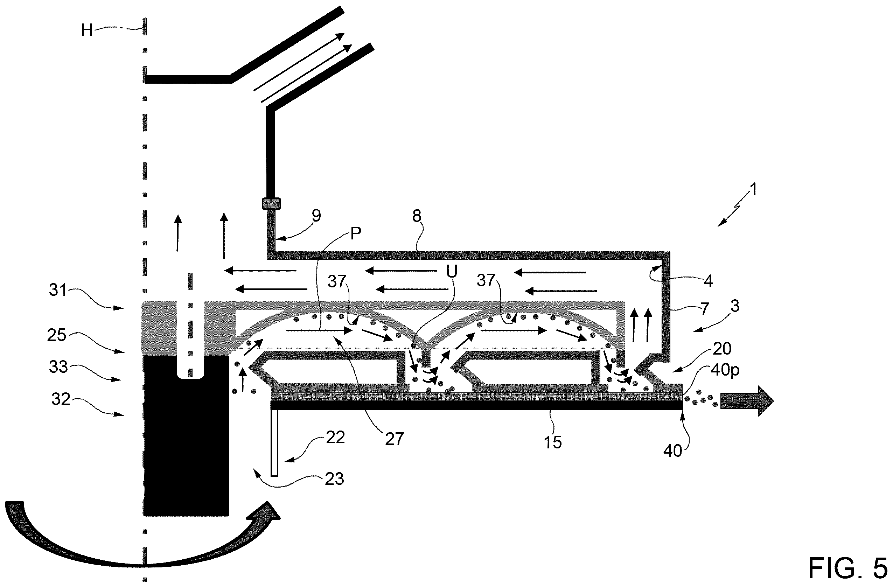

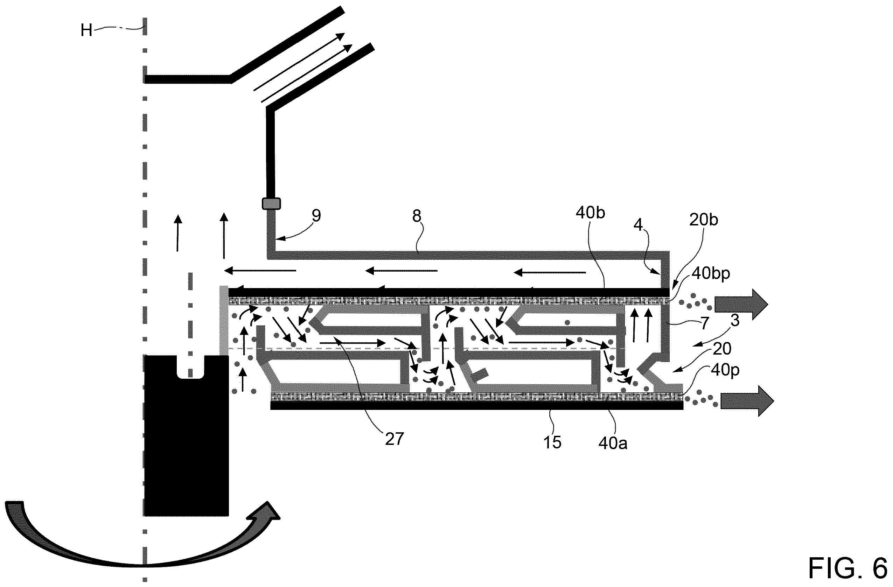

In greater detail, the casing 3 is delimited by a cylindrical side wall 7 coaxial with axis H and by a flat rear wall 8 transversal to axis H from which a rear tubular conduit **9** extends (see in particular Figures 3 and 4), also cylindrical and coaxial with axis H. In use, the conduit 9 is suitable to be connected to the engine intake system (see Figures 5 and 6).

A free peripheral edge 7a of the cylindrical wall 7 is provided with a plurality of short appendages 10, which extend in an axial direction, are angularly spaced from one another, have the same length, and end with a tooth 11 facing the outside of the cup-shaped casing 3.

The cup-shaped casing 3 is closed at the front by a flat circular wall 15 provided with a plurality of peripheral notches 16 in which the end portions of the appendages 10 fit, with the teeth 11 snapping on an outer surface of the circular wall 15. In this way, the flat circular wall 15 is spaced from the free peripheral edge 7a, and a **plurality of outlet openings 20,** the function of which will be explained later, are formed on the walls of the cup-shaped casing 7.

The flat circular wall 15 is provided with a central integral tube 22 defining a **central suction opening 23 and a plurality of side suction openings 24.**

The chamber 4 houses a rotary system 25, which is part of the rotating assembly and shaped to define a plurality of independent paths P which extend from the front gas suction opening 23/24 to the outlet openings 20 (in Figure 5 these paths are indicated by a number of arrows). The rotary system 25 is firmly housed in the chamber 4.

The rotary system 25 according to the present invention is configured to carry out a dual function, namely:
a) providing a radial blading 27 for a centrifugal fan that sucks the gas mixture from the central opening 23/24 and sends it to the outlet openings 20; and
b) providing, by means of the radial blading 27, an impact system along which the sucked gas mixture flows and the oil particles present in the mixture impact against walls defining the path and are pushed by the centrifugal force towards the outlet openings 20 so as to be released outside the rotary separator 1 (in Figure 5, see the arrow "oil").

The rotary system 25 comprises a first flat body 31 facing the flat rear part 8 and a second flat body 32 facing the wall 15, which are superimposed in an axial direction; in the example shown there is also an intermediate flat body 33 arranged between the first body 31 and the second body 32 and designed to accelerate and guide the flow of the gas mixture by means of nozzle U-shaped sections, as will be explained below.

The first body 30 has the function of conveying the separated oil and is provided with a plurality of first through openings angularly spaced about axis H.

In greater detail, the first conveyor body 31 comprises three concentric annular elements 35 mutually interconnected by straight radial elements 36 equally angularly spaced from one another to define the first openings which lie on first and second concentric annuli.

The second body 32 has a plurality of blind seats 37 delimited by curved walls, each of which faces a respective first opening of the first body 31. The blind seats 37 have a concavity facing the spacer body 33.

In this way, the blind seats 37 lie on a first and a second annulus, which are concentric with each other and face the annuli defined on the first body 31.

The third body 33 acts as a flow accelerator and is provided with a plurality of second through openings angularly spaced about axis H and shaped so as to communicate, on one side, with a seat 37, and on the other side, with a first opening of the first body 31; the section of said second openings decreases from the seat 37 towards the first opening of the first body 31 so that the gas mixture flowing through said second openings is accelerated (see the U nozzle).

A sheet of composite material 40 is arranged between the first body 31 and the side of the wall 15 facing the inside of the cylindrical chamber 4, which sheet is made of fleece fibres configured and oriented to aggregate the oil particles together and trap the oil and make it flow therein, with the aid of the centrifugal force, in the radial direction R towards the outlet openings 20.

The composite material 40 can be made of long fibres, for example glass fibres, glued together at the points where the fibres cross, and configured and oriented to aggregate the oil particles, which adhere to the fibres by coalescing to each other, thus increasing their average size. This material is therefore suitable to trap the oil therein and make it flow along its fibres in a radial direction, under the thrust of the centrifugal force, towards the oil outlet openings 20.

Peripheral end portions 40p (see Figure 4) of the sheet of composite material 40 engage the openings 20.

The elements that make up the rotary separator are preferably moulded in a plastic material and retained pressed together in the axial direction by a plurality of metal screws 42 (four in the example, obviously the number may be different), which extend axially from the rear wall 8 to the flat circular wall 15 passing through the cup-shaped casing 4 throughout its axial length. The screws 42 can also be used for fastening the rotary separator to the shank (not shown), which is part of the engine providing the rotary motion to the rotary separator 1 by rotating the casing 3 and the rotary system 25.

In use, the rotation of the rotary separator 1 rotates the radial blading 27 integral with the casing 3, which sucks up the gas mixture present in the crankcase from the opening 23/24.

The sucked gas mixture follows the individual winding paths P, resulting in the gases being conveyed from the blind seats 37 to the openings of the first body, passing through the second openings of the intermediate body 33, where the gases are accelerated, and subsequently the gas mixture impacts against the sheet 40 where the oil particles are released. The oil particles are thus retained in the fibres of the sheet 40 and sent, by the action of the centrifugal force, radially towards the outlet openings 20 from which they are released towards the outside of the outlet openings 20. The oil particles thus detach from the peripheral end portions 40p.

In other words, the rotary separator 1 generates a positive pressure gradient which has the opposite sign of the pressure drop it generates by restricting the passage sections in the second openings to accelerate the gas mixture.

The rotation of the rotary separator 1 generates a pressure gradient between the gas suction opening 23/24 and the rear outlet conduit 9, thus improving the suction of the gas mixture (blow-by) present in the crankcase by the intake depression. This gas mixture flows along the paths P of the rotary system, alternating the passages in the seats 37 and in the second openings of the intermediate body 33, which together make up the centrifugal radial blading 27 with a winding path, each time forcing the gas mixture to pass through the second openings which provide accelerator nozzles formed in the intermediate body 33.

The sharp deviations of the accelerated gas mixture (see Figure 5) force the oil droplets (bold arrows) to travel paths necessarily having a larger radius than those which instead can be travelled by the gaseous part (thin arrows), resulting in the oil droplets impacting the sheet of synthetic material 40 from which they are directly released through the openings 20. The particles impacting the sheet 40 aggregate due to the surface tension and the adhesiveness, thus forming larger oil droplets which are effectively pushed by the centrifugal force and run along the fibres of the sheet 40 towards the peripheral end portions 40p from which the oil is released through the outlet openings 20, thus falling back into the oil sump.

In this way, the prevalence created allows good suction of the gas mixture even for low engine rotational speeds. Using the rotary separator allows effective separation and collection of the oil particles which are sent towards the outlet openings 20 by the centrifugal force, thus preventing the rotary separator from clogging. In other words, the oil separated from the exhaust gases is effectively discharged by the rotary separator. The rotary separator 1 also consists of a reduced number of parts (typically moulded in a plastic material, as mentioned above), is low cost, easy to manufacture and assemble, and very robust.

The rotary separator can take any vertical, horizontal or inclined position as it does not need the force of gravity to work.

According to the variant in Figure 6, the rotary system 25 comprises a first sheet of composite material 40a arranged inside the chamber 4 in contact with the part 15, and a second sheet of composite material 40b facing the rear wall 8. The sheets 40a, 40b are arranged on opposite sides of the rotary system 25, which provides winding paths (shown by arrows) that extend between portions alternatively arranged facing the first sheet 40a and the second sheet 40b. The first sheet 40a is formed of fibres configured and oriented to aggregate the oil particles which adhere to the fibres by coalescing to each other, thus increasing their average size; said material is suitable to trap the oil therein and make it flow along its fibres in a radial direction, under the thrust of the centrifugal force, towards the oil outlet openings 20 where the peripheral end portions 40p are arranged. In turn, the second sheet 40b is formed of fibres configured and oriented to aggregate the oil particles which adhere to the fibres by coalescing to each other, thus increasing their average size; said material is suitable to trap the oil therein and make it flow along its fibres in a radial direction, under the thrust of the centrifugal force, towards the additional oil outlet openings 20b, which are formed in the cylindrical wall 7 and axially spaced with respect to the openings 20a. In this case, too, the second sheet 40b is provided with peripheral end portions 40p which engage the additional oil outlet openings 20b.

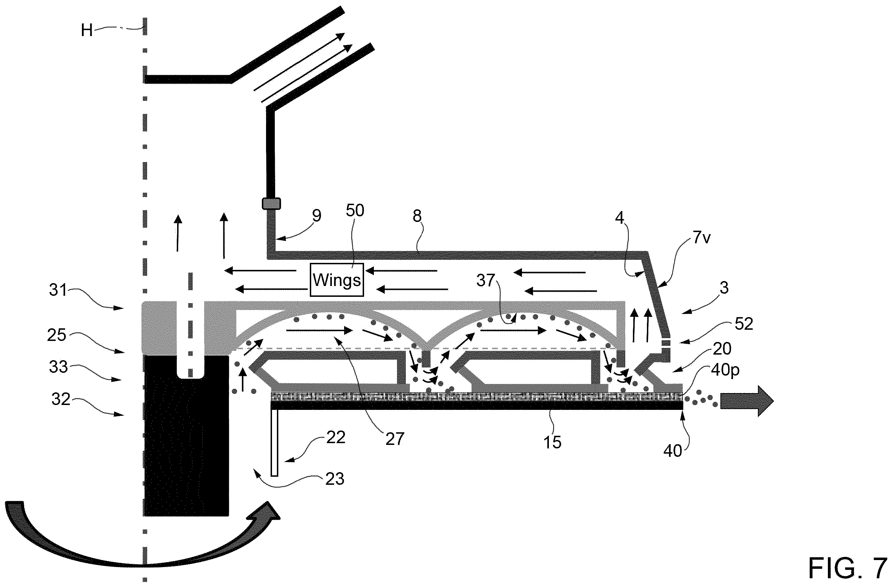

The embodiment shown in Figure 7 differs from that shown in Figure 5 in that:
a) A plurality of additional radial wings 50 are provided inside the cup-shaped casing 3 in a portion of the cylindrical chamber 4 that on one side communicates with the tubular conduit 9 adapted to be connected to the suction system of the engine, and on the other side communicates with the radial blading 27 of the centrifugal fan. In this way, the suction action is implemented. The additional radial wings 50 have a radial extension which can be determined based on the characteristics of the overall circuit so that the pressure generated by the rotary separator is not too high.
b) The cup-shaped casing 3 is provided with an approximately truncated cone-shaped, flared side wall 7v provided with a plurality of through holes 52, which are made on the flared wall 7v in proximity to the larger-diameter end portion and place the chamber 4 in communication with the outside of the cup-shaped casing. The holes 52 are used to drain the oil that fails to be drained through the openings 20. In the embodiment of Figure 7, the centrifugal force forces the oil to converge towards the holes 52 from where the oil can be easily discharged to the outside of the casing 3. The number and diameter of the holes 52 is such as to effectively evacuate massive flows of liquid, and therefore dense oil, but also such as not to allow the re-entry of significant flow rates of gaseous mixture, which has a specific weight about one ten thousandth that of the liquid oil.

## Claims

1. A rotary separator (1) for filtering the gas mixture present in the crankcase, comprising a casing (3) provided with at least one gas suction opening (23, 24) and a plurality of oil outlet side openings (20),
said casing defining a chamber (4) that houses a rotary system (25) which is shaped to define a plurality of paths (P) which extend from the gas suction opening (23, 24) to the oil outlet openings (20),
**wherein** the rotary system (25) is configured to carry out a dual function:
b) providing a radial blading (27) for a centrifugal fan that sucks the gas mixture from the suction opening (23, 24) and sends it to the outlet openings (22); and
providing, by means of said radial blading (27), an impact system along which the sucked gas mixture flows and the oil particles present in the mixture impact against walls defining the path and are pushed by the centrifugal force towards the oil outlet openings (20) so as to be released outside the rotary separator (1), **characterised in that** the rotary system (25) is configured to provide nozzles with sections decreasing along the path (P) adapted to accelerate the gas mixture; abutment means (40) being provided, which are adapted to carry out a sudden change of path of the accelerated gas mixture to obtain the release of the oil particles.

2. The separator according to claim 1, wherein said rotary system (25) comprises at least one sheet of composite material (16) arranged within the chamber (4) and formed of fibres configured and oriented to aggregate the oil particles which adhere to the fibres by coalescing to each other, thus increasing their average size; said material is configured to trap the oil therein and is configured to make it flow along its fibres in a radial direction, under the thrust of the centrifugal force, towards the oil outlet openings (20).

3. The separator according to claim 2, wherein the sheet of composite material (16) comprises peripheral end portions (40p) that engage the openings (20); said oil particles being released directly from said peripheral end portions (40p).

4. The separator according to claim 1, wherein said abutment means (40) comprise at least one sheet of composite material (16) arranged within the chamber (4) and formed of fibres configured and oriented to aggregate the oil particles which adhere to the fibres by coalescing to each other, thus increasing their average size; said material is suitable to trap the oil therein and make it flow along its fibres in a radial direction, under the thrust of the centrifugal force, towards the oil outlet openings (20).

5. The separator according to any one of the preceding claims, wherein the rotary system (25) comprises a first flat body (31), which has the function of conveying the separated oil, an intermediate flat body (33), which is designed to accelerate and guide the gas mixture by means of nozzle shaped sections, and a second flat body (32) provided with blind seats (37).

6. The separator according to claim 5, wherein the first flat body (30) is provided with a plurality of first through openings angularly spaced from one another:
the second flat body (32) has a plurality of blind seats (37) delimited by curved walls, each of which faces a respective first opening of the first body (31); the blind seats have a concavity facing the intermediate flat body (33);
the intermediate flat body (33) is provided with a plurality of second through openings angularly spaced from one another and shaped so as to communicate, on one side, with a seat (37), and on the other side, with a first opening of the first body (31); the section of said second openings decreases from the seat (37) towards the first opening of the first body (31) so that the gas mixture flowing through said second openings is accelerated.

7. The separator according to any one of the preceding claims, wherein said gas suction opening (23, 24) is made on a front wall (15) of said casing (3) that comprises a cup-shaped casing (3) closed by said front wall (15).

8. The separator according to any one of the preceding claims, wherein said casing has a conduit (9) communicating with said chamber (4) and adapted to be connected to a suction system of the engine.

9. The separator according to claim 1, wherein said rotary system (25) comprises a first sheet of composite material (40a) arranged inside the chamber (4) and a second sheet of composite material (40b), which face one another and are arranged on opposite sides of the rotary system (25), which provides winding paths that extend between portions alternatively arranged facing the first sheet and the second sheet; the first sheet being formed of fibres configured and oriented to aggregate the oil particles which adhere to the fibres by coalescing to each other, thus increasing their average size; said material is suitable to trap the oil therein and make it flow along its fibres in a radial direction, under the thrust of the centrifugal force, towards the oil outlet openings (20);
the second sheet being formed of fibres configured and oriented to aggregate the oil particles which adhere to the fibres by coalescing to each other, thus increasing their average size; said material is suitable to trap the oil therein and make it flow along its fibres in a radial direction, under the thrust of the centrifugal force, towards further oil outlet openings (20).

10. The separator according to claim 1, wherein a plurality of additional radial wings (50) are provided inside the casing (3) in a portion of said cylindrical chamber (4) that on one side communicates with a conduit (9) adapted to be connected to the suction system of the engine and on the other side communicates with the radial blading (27) of the centrifugal fan.

11. The separator according to claim 1, wherein the casing is cup-shaped (3) and provided with an approximately truncated cone-shaped, flared side wall (7v) provided with a plurality of through holes (52), which are made on the flared wall (7v) in proximity to the larger-diameter end portion and place the chamber (4) in communication with the outside of the cup-shaped casing; said through holes (52) are configured to drain the oil that fails to be drained through the oil outlet openings (20).

## Patentansprüche

1. Rotationsabscheider (1) zum Filtern des im Kurbelgehäuse vorhandenen Gasgemisches, umfassend ein Gehäuse (3), das mit mindestens einer Gasansaugöffnung (23, 24) und einer Vielzahl von Ölauslassseitenöffnungen (20) vorgesehen ist,
wobei das besagte Gehäuse eine Kammer (4) definiert, die ein Rotationssystem (25) aufnimmt, welches geformt ist, eine Vielzahl von Pfaden (P) zu definieren, welche sich von der Gasansaugöffnung (23, 24) zu den Ölauslassöffnungen (20) erstrecken,
wobei das Rotationssystem (25) ausgebildet ist, eine Doppelfunktion auszuführen:
b) Bereitstellen einer radialen Beschaufelung (27) für ein Zentrifugalgebläse, das das Gasgemisch aus der Ansaugöffnung (23, 24) ansaugt und es zu den Auslassöffnungen (22) leitet; und
Bereitstellen mittels der besagten radialen Beschaufelung (27) eines Aufprallsystems entlang welchem das angesaugte Gasgemisch strömt und die in der Vorrichtung vorhandenen Ölpartikel gegen die den Pfad begrenzenden Wände prallen und durch die Zentrifugalkraft in Richtung der Ölauslassöffnungen (20) gedrückt werden, so dass sie außerhalb des Rotationsabscheiders (1) freigesetzt werden, **dadurch gekennzeichnet, dass** das Rotationssystem (25) ausgebildet ist, Düsen mit entlang des Pfades (P) abnehmenden Abschnitten vorzusehen, die geeignet sind, das Gasgemisch zu beschleunigen; wobei Anschlagmittel (40) vorgesehen sind, welche geeignet sind, eine plötzliche Änderung des Pfades des beschleunigten Gasgemisches durchzuführen, um die Freisetzung der Ölpartikel zu erreichen.

2. Abscheider nach Anspruch 1, wobei das besagte Rotationssystem (25) mindestens ein Blatt aus Verbundmaterial (16) umfasst, das innerhalb der Kammer (4) angeordnet und aus Fasern geformt ist, die ausgebildet und ausgerichtet sind, die Ölpartikel, welche an den Fasern anhaften, durch Koaleszenz miteinander zu aggregieren, wodurch ihre durchschnittliche Größe erhöht wird; wobei das besagte Material ausgebildet ist, das Öl darin einzufangen und ausgebildet ist, es unter dem Druck der Zentrifugalkraft entlang seiner Fasern in einer radialen Richtung zu den Ölauslassöffnungen (20) strömen zu lassen.

3. Abscheider nach Anspruch 2, wobei das Blatt aus Verbundmaterial (16) periphere Endabschnitte (40p) aufweist, die in die Öffnungen (20) eingreifen; wobei die besagten Ölpartikel direkt aus den besagten peripheren Endabschnitten (40p) freigesetzt werden.

4. Abscheider nach Anspruch 1, wobei die besagten Anschlagmittel (40) mindestens ein Blatt aus Verbundmaterial (16) umfassen, das innerhalb der Kammer (4) angeordnet und aus Fasern geformt ist, die ausgebildet und ausgerichtet sind, die Ölpartikel, welche an den Fasern anhaften, durch Koaleszenz miteinander zu aggregieren, wodurch ihre durchschnittliche Größe erhöht wird; wobei das besagte Material geeignet ist, das Öl darin einzufangen und es unter dem Druck der Zentrifugalkraft entlang seiner Fasern in einer radialen Richtung zu den Ölauslassöffnungen (20) strömen zu lassen.

5. Abscheider nach einem der vorhergehenden Ansprüche, wobei das Rotationssystem (25) einen ersten flachen Körper (31), welcher die Funktion hat, das abgeschiedene Öl zu fördern, einen dazwischenliegenden flachen Körper (33), welcher ausgelegt ist, das Gasgemisch mittels düsenförmiger Abschnitte zu beschleunigen und zu führen, und einen zweiten flachen Körper (32), der mit Blindsitzen (37) versehen ist, umfasst.

6. Abscheider nach Anspruch 5, wobei der erste flache Körper (30) mit einer Vielzahl von ersten Durchgangsöffnungen versehen ist, die winklig voneinander beabstandet sind:
der zweite flache Körper (32) eine Vielzahl von Blindsitzen (37) aufweist, die durch gekrümmte Wände begrenzt sind, von denen jede eine entsprechende erste Öffnung des ersten Körpers (31) aufweist; wobei die Blindsitze eine Konkavität haben, die dem dazwischenliegenden flachen Körper (33) zugewandt ist;
der dazwischenliegende flache Körper (33) mit einer Vielzahl von zweiten Durchgangsöffnungen versehen ist, die winklig voneinander beabstandet und so geformt sind, dass sie auf einer Seite mit einem Sitz (37), und auf der anderen Seite mit einer ersten Öffnung des ersten Körpers (31) in Verbindung stehen; wobei der Querschnitt der besagten zweiten Öffnungen von dem Sitz (37) zu der ersten Öffnung des ersten Körpers (31) hin abnimmt, so dass das durch die besagten zweiten Öffnungen strömende Gasgemisch beschleunigt wird.

7. Abscheider nach einem der vorhergehenden Ansprüche, wobei die besagte Gasansaugöffnung (23, 24) an einer Vorderwand (15) des besagten Gehäuses (3) ausgebildet ist, das ein becherförmiges Gehäuse (3) aufweist, das durch die besagte Vorderwand (15) geschlossen ist.

8. Abscheider nach einem der vorhergehenden Ansprüche, wobei das besagte Gehäuse eine Leitung (9) aufweist, die mit der besagten Kammer (4) in Verbindung steht und ausgelegt ist, an ein Ansaugsystem des Motors angeschlossen zu werden.

9. Abscheider nach Anspruch 1, wobei das Rotationssystem (25) ein erstes Blatt aus Verbundmaterial (40a), das innerhalb der Kammer (4) angeordnet ist, und ein zweites Blatt aus Verbundmaterial (40b) umfasst, welche einander gegenüberliegen und auf gegenüberliegenden Seiten des Rotationssystems (25) angeordnet sind, welches Wicklungspfade bereitstellt, die sich zwischen Abschnitten erstrecken, die abwechselnd gegenüber dem ersten Blatt und dem zweiten Blatt angeordnet sind; wobei das erste Blatt aus Fasern geformt ist, die ausgebildet und ausgerichtet sind, die Ölpartikel, welche an den Fasern aneinander haften, durch Koaleszenz miteinander zu aggregieren, wodurch ihre durchschnittliche Größe erhöht wird; wobei das besagte Material geeignet ist, das Öl darin einzuschließen und es unter dem Druck der Zentrifugalkraft entlang seiner Fasern in einer radialen Richtung zu den Ölauslassöffnungen (20) strömen zu lassen;
wobei das zweite Blatt aus Fasern geformt ist, die ausgebildet und ausgerichtet sind, die Ölpartikel, welche an den Fasern anhaften, durch Koaleszenz miteinander zu aggregieren, wodurch ihre durchschnittliche Größe erhöht wird; wobei das besagte Material geeignet ist, das Öl darin einzufangen und es unter dem Druck der Zentrifugalkraft entlang seiner Fasern in einer radialen Richtung zu weiteren Ölauslassöffnungen (20) strömen zu lassen.

10. Abscheider nach Anspruch 1, wobei eine Vielzahl von zusätzlichen radialen Flügeln (50) innerhalb des Gehäuses (3) in einem Abschnitt der besagten zylindrischen Kammer (4) vorgesehen ist, der auf einer Seite mit einer Leitung (9) in Verbindung steht, die geeignet ist, mit dem Ansaugsystem des Motors verbunden zu werden, und auf der anderen Seite mit der radialen Beschaufelung (27) des Zentrifugalgebläses in Verbindung steht.

11. Abscheider nach Anspruch 1, wobei das Gehäuse becherförmig (3) und mit einer annähernd kegelstumpfförmigen, konisch erweiterten Seitenwand (7v) versehen ist, die mit einer Vielzahl von Durchgangslöchern (52) versehen ist, welche an der erweiterten Wand (7v) in der Nähe des Endabschnitts mit größerem Durchmesser ausgebildet sind und die Kammer (4) in Verbindung mit der Außenseite des becherförmigen Gehäuses setzen; wobei die Durchgangslöcher (52) ausgebildet sind, das Öl, das nicht durch die Ölauslassöffnungen (20) abgeführt wird, abzuführen.

## Revendications

1. Séparateur rotatif (1) pour filtrer le mélange gazeux présent dans le carter, comprenant un boîtier (3) muni d'au moins une ouverture d'aspiration de gaz (23, 24) et d'une pluralité d'ouvertures latérales de sortie d'huile (20),
ledit boîtier définissant une chambre (4) qui abrite un système rotatif (25) qui est formé pour définir une pluralité de trajets (P) qui s'étendent de l'ouverture d'aspiration de gaz (23, 24) aux ouvertures de sortie d'huile (20),
**dans lequel** le système rotatif (25) est configuré pour remplir une double fonction:
b) pourvoir une aube radiale (27) pour un ventilateur centrifuge qui aspire le mélange gazeux de l'ouverture d'aspiration (23, 24) et l'envoie aux ouvertures de sortie (22) ; et
pourvoir, au moyen de ladite aube radiale (27), un système d'impact le long duquel le mélange de gaz aspiré s'écoule et les particules d'huile présentes dans le mélange heurtent les parois définissant le trajet et sont poussées par la force centrifuge vers les ouvertures de sortie d'huile (20) de manière à être libérée à l'extérieur du séparateur rotatif (1), **caractérisé en ce que** le système rotatif (25) est configuré pour pourvoir des buses avec des sections décroissantes le long du trajet (P) adaptées pour accélérer le mélange gazeux; des moyens de butée (40) étant prévus, qui sont adaptés pour effectuer un changement brusque de trajectoire du mélange gazeux accéléré afin d'obtenir la libération des particules d'huile.

2. Séparateur selon la revendication 1, dans lequel ledit système rotatif (25) comprend au moins une feuille de matériau composite (16) disposée à l'intérieur de la chambre (4) et formée de fibres configurées et orientées pour agréger les particules d'huile qui adhèrent aux fibres en fusionnant les unes avec les autres, augmentant ainsi leur taille moyenne; ledit matériau est configuré pour emprisonner l'huile à l'intérieur et est configuré pour la faire couler le long de ses fibres dans une direction radiale, sous la poussée de la force centrifuge, vers les ouvertures de sortie d'huile (20).

3. Séparateur selon la revendication 2, dans lequel la feuille de matériau composite (16) comprend des portions d'extrémité périphériques (40p) qui engagent les ouvertures (20) ; lesdites particules d'huile étant libérées directement desdites parties d'extrémité périphériques (40p).

4. Séparateur selon la revendication 1, dans lequel lesdits moyens de butée (40) comprennent au moins une feuille de matériau composite (16) disposée à l'intérieur de la chambre (4) et formée de fibres configurées et orientées pour agréger les particules d'huile qui adhèrent aux fibres en fusionnant les unes avec les autres, augmentant ainsi leur taille moyenne; ledit matériau est apte à piéger l'huile à l'intérieur et à la faire couler le long de ses fibres dans une direction radiale, sous la poussée de la force centrifuge, vers les ouvertures de sortie d'huile (20).

5. Séparateur selon l'une des revendications précédentes, dans lequel le système rotatif (25) comprend un premier corps plat (31), qui a pour fonction de transporter l'huile séparée, un corps plat intermédiaire (33), qui est conçu pour accélérer et guider le mélange gazeux au moyen de sections en forme de buse et d'un second corps plat (32) pourvu de sièges aveugles (37) .

6. Séparateur selon la revendication 5, dans lequel le premier corps plat (30) est pourvu d'une pluralité de premières ouvertures traversantes espacées angulairement les unes des autres :
le deuxième corps plat (32) comporte une pluralité de sièges aveugles (37) délimités par des parois incurvées, dont chacune fait face à une première ouverture respective du premier corps (31); les sièges aveugles ont une concavité tournée vers le corps plat intermédiaire (33);
le corps plat intermédiaire (33) est pourvu d'une pluralité de deuxièmes ouvertures traversantes espacées angulairement les unes des autres et formées de manière à communiquer, d'un côté, avec un siège (37), et de l'autre côté, avec une première ouverture du premier corps (31); la section desdites deuxièmes ouvertures décroît à partir du siège (37) vers la première ouverture du premier corps (31) de sorte que le mélange gazeux s'écoulant à travers lesdites deuxièmes ouvertures est accéléré.

7. Séparateur selon l'une des revendications précédentes, dans lequel ladite ouverture d'aspiration de gaz (23, 24) est réalisée sur une paroi avant (15) dudit boîtier (3) qui comprend un boîtier en forme de coupelle (3) fermé par ladite paroi avant (15) .

8. Séparateur selon l'une des revendications précédentes, dans lequel ledit boîtier a un conduit (9) communiquant avec ladite chambre (4) et adapté pour être connecté à un système d'aspiration du moteur.

9. Séparateur selon la revendication 1, dans lequel ledit système rotatif (25) comprend une première feuille de matériau composite (40a) disposée à l'intérieur de la chambre (4) et une deuxième feuille de matériau composite (40b), qui se font face et sont disposées sur des côtés opposés du système rotatif (25), qui prévoit des trajets d'enroulement qui s'étendent entre des parties disposées alternativement en face de la première feuille et de la seconde feuille; la première feuille étant formée de fibres configurées et orientées pour agréger les particules d'huile qui adhèrent aux fibres en fusionnant les unes avec les autres, augmentant ainsi leur taille moyenne; ledit matériau est apte à piéger l'huile à l'intérieur et à la faire couler le long de ses fibres dans une direction radiale, sous la poussée de la force centrifuge, vers les ouvertures de sortie d'huile (20);
la seconde feuille étant formée de fibres configurées et orientées pour agréger les particules d'huile qui adhèrent aux fibres en fusionnant les unes avec les autres, augmentant ainsi leur taille moyenne; ledit matériau est apte à piéger l'huile à l'intérieur et à la faire couler le long de ses fibres dans une direction radiale, sous la poussée de la force centrifuge, vers d'autres ouvertures de sortie d'huile (20).

10. Séparateur selon la revendication 1, dans lequel une pluralité d'ailes radiales supplémentaires (50) sont prévues à l'intérieur du boîtier (3) dans une partie de ladite chambre cylindrique (4) qui communique d'un côté avec un conduit (9) adapté pour être raccordé au système d'aspiration du moteur et qui, de l'autre côté, communique avec l'aube radiale (27) du ventilateur centrifuge.

11. Séparateur selon la revendication 1, dans lequel le boîtier est en forme de coupelle (3) et est pourvu d'une paroi latérale évasée en forme de cône approximativement tronconique (7v) pourvue d'une pluralité de trous traversants (52), qui sont réalisés sur la paroi évasée (7v) à proximité de la partie d'extrémité de plus grand diamètre et place la chambre (4) en communication avec l'extérieur du boîtier en forme de coupelle; lesdits trous traversants (52) sont configurés pour drainer l'huile qui ne parvient pas à s'écouler à travers les ouvertures de sortie d'huile (20).
